# EUROPÄISCHE PATENTANMELDUNG

(11) **EP 1 215 034 A1**
(43) Veröffentlichungstag der Anmeldung: **19.06.2002**
(21) Anmeldenummer: 01128576.4
(22) Anmeldetag: 30.11.2001
(51) Int. Cl.: B29C 67/00, E04B 1/80, E04B 1/62

(54) **Verfahren und Vorrichtung für die Herstellung von Dämmplatten aus Schaumstoff**

(30) Priorität: 09.12.2000 DE 10061361
(71) Anmelder: Knauf Dämmstoffe GmbH, 59329 Wadersloh (DE)
(72) Erfinder: Becker, Wolfgang, 59494 Soest (DE)
(74) Vertreter: Bernhardt, Reinold, Dr. Dipl.Phys.

(57) **Zusammenfassung**

Die Erfindung betrifft ein Verfahren zur Herstellung von Dämmplatten aus Schaumstoff, insbesondere für die Außendämmung von Gebäudewänden im Kellerbereich. Erfindungsgemäß wird ein Schaumstoffblock oder eine Schaumstoffbahn in Plattenrohlinge zerschnitten und beim Zerschneiden gebildete Schnittflächen der Plattenrohlinge gegen eindringende Feuchtigkeit abgedichtet. In einer Vorrichtung nach der Erfindung erfolgt die Abdichtung durch eine Preßeinrichtung mit aufheizbaren Preßelementen (6,7;9-12) zur Preßbehandlung der beim Zerschneiden der Schaumstoffblöcke gebildeten Schnittflächen der Plattenrohlinge.

## Beschreibung

Die Erfindung betrifft ein Verfahren zur Herstellung von Dämmplatten aus Schaumstoff, insbesondere für die Außendämmung von Gebäudewänden im Kellerbereich, gemäß Oberbegriff des Anspruchs 1, sowie eine Vorrichtung zur Durchführung des Verfahrens gemäß Anspruch 18.

Zur Verwendung in Feuchtbereichen geeignete, Wasser nur in geringem Umfang aufnehmende Dämmplatten aus Polystyrolschaumstoff werden herkömmlich mit Hilfe von Formwerkzeugen hergestellt. In den Formhohlraum wird ein Granulat aus Polystyrolpartikeln gefüllt, welche ein Treibgas einschließen. Unter Wärmeeinwirkung blähen sich die Partikel auf, füllen den Formhohlraum auf und backen zusammen.

Der vorliegenden Erfindung liegt die Aufgabe zugrunde, den bisher für die Herstellung solcher Schaumstoffdämmplatten erforderlichen Aufwand zu verringern.

Diese Aufgabe wird erfindungsgemäß durch ein Verfahren mit folgenden Verfahrensschriften gelöst: Herstellen eines Schaumstoffblocks oder einer Schaumstoffbahn, Zerschneiden des Schaumstoffblocks oder der Schaumstoffbahn in Plattenrohlinge und Abdichten der beim Zerschneiden des Schaumstoffblocks oder der Schaumstoffbahn gebildeten Schnittflächen der Plattenrohlinge.

Gegenüber der zeit- und werkzeugaufwendigen Einzelanfertigung von Schaumstoffdämmplatten im Formhohlraum eines Formwerkzeugs erfolgt nach der vorliegenden Erfindung nur noch eine solche Einzelanfertigung ganzer Blöcke oder Bahnen. die mit geringem Arbeitsaufwand in eine Vielzahl von Plattenrohlingen zerschnitten werden können. Der zur Herstellung der Plattenrohlinge erforderliche Aufwand ist so gering, daß sich trotz der erfindungsgemäß noch erforderlichen Abdichtung der an den Platten gebildeten Schnittflächen insgesamt eine erhebliche Aufwandersparnis ergibt.

Während bei der Herstellung einer Schaumstoffdämmplatte mit Hilfe eines Formwerkzeugs durch Materialverdichtung an der Formhohlraumwand eine gegen Eindringen von Feuchtigkeit ausreichend abgedichtete Dämmplattenoberfläche erzeugt wird, liegt an den Schnittflächen die undichte Schaumstoffstruktur frei. Erfindungsgemäß erfolgt daher eine Abdichtung dieser Schnitfflächen, so daß es z.B. möglich ist, die auf diese Weise hergestellten Schaumstoffdämmplatten in besonders feuchter Umgebung, z.B. zur Abdichtung von Gebäudewänden im Kellerbereich, einzusetzen.

Zur Abdichtung läßt sich Kunststoffmaterial an den Schnittflächen in eine möglichst geschlossene Haut überführen, was unter Anlösen oder Anschmelzen der Schnittfläche erfolgen kann.

Sofern an das Aussehen der Oberfläche der Dämmplatten keine besonders hohen Anforderungen bestehen, kommen ein Anschmelzen durch Wärmestrahlung und ein Anlösen durch Besprühen der Plattenrohlinge mit einem Lösungsmittel in Betracht. Auch bei hoher Gleichmäßigkeit der Strahlungsintensität und des Sprühauftrags läßt sich auf diese Weise zwar eine zusammenhängende dichte Haut an der Rohlingsoberfläche aber keine ebene Oberfläche bilden.

Es wäre auch denkbar, den Schneidprozeß mit Hilfe von stromdurchflossenen geheizten Schneiddrähten so durchzuführen, daß gleichzeitig mit dem Zerschneiden, bei dem das Schaumstoffmaterial geschmolzen wird, eine Hautbildung unter entsprechender Versiegelung der Oberfläche erfolgt.

Alternativ zur Überführung des Schaumstoffs an der Oberfläche in eine geschlossene oder wenigstens weitgehend geschlossene Haut kann zur Abdichtung auf die Schnittfläche eine Beschichtung aufgebracht werden, wobei hierfür neben einer Auftragsschicht, beispielsweise aus einem das Schaumstoffmaterial nicht anlösenden Lack, eine Folie in Betracht kommt. Eine solche Folie ließe sich auf den Plattenrohling z.B. aufschrumpfen oder/und könnte mit dem Plattenrohling verklebt werden, wobei daran zu denken ist, daß eine aus einem Extrusionsspalt austretende Folie unmittelbar auf den Plattenrohling unter Verklebung mit seiner Oberfläche aufgebracht wird. Zweckmäßig besteht die Folie aus dem gleichen Kunststoffmaterial wie der Plattenrohling, vorzugsweise Polystyrol.

In einer bevorzugten Ausführungsform wird zur Abdichtung der Schnittflächen auf die Schnittflächen eine Preßkraft ausgeübt. Insbesondere bei gleichzeitiger Wärmeeinwirkung läßt sich so eine glatte Oberfläche erzielen, die durch eine geschlossene oder weitgehend geschlossene Haut gebildet ist.

Die Preßkraft kann mit Hilfe einer aufheizbaren Walze oder eines heizbaren Preßstempels ausgeübt werden. Durch den Preßstempel bzw. die Walze kann gleichzeitig mit der Abdichtung der Schnittfläche eine Formung der Schnittfläche erfolgen. Während z.B. in wenigstens eine der Deckflächen der Plattenrohlinge ein dekoratives Muster eingepreßt werden kann, ließen sich an den schmalen Randflächen des Plattenrohlings Stoßprofile formen, über die ggf. eine Steckverbindung zwischen den Platten über ihren Randflächen hergestellt werden kann. Im einfachsten Fall wird in die Randflächen als Stoßprofil eine Stufung für die Bildung einer Falzverbindung eingepreßt.

Es ist möglich, auf sämtliche Schnittflächen des Plattenrohlings gleichzeitig mit Hilfe von Preßstempeln eine Preßkraft auszuüben, wobei die Preßstempel in ihrer Vorschubendstellung einen den bearbeiteten Plattenrohling vollständig einschließenden Formraum bilden. Beim Einsatz von Walzen wird zweckmäßig aus vier Walzen ein Walzenspalt gebildet, der den Plattenrohling vollkommen umschließt. Durch die genannten Maßnahmen läßt sich verhindern, daß am Rand Dämmplatte unabgedichtete Stellen verbleiben.

In einer weiteren Ausführungsform der Erfindung werden zur Abdichtung der Plattenrohlinge Preßstempel und Walzen in Kombination eingesetzt, wobei insbesondere die Deckflächen des Plattenrohlings mittels Preßstempeln gepreßt und die schmalen Randflächen des Plattenrohlings gewalzt werden. Zum Walzen der schmalen Randflächen läßt sich eine translatorisch bewegbare Rollenwalze verwenden, wobei z.B. eine einzige Walze unter Bearbeitung aller vier Randflächen um die Platte umlaufen kann.

Es wäre ferner denkbar, die Deckflächen des Plattenrohlings mit einer Folie zu versehen und nur die Randflächen durch eine geheizte Walze zu bearbeiten.

In einer weiteren Ausführungsform der Erfindung sind die schmalen Randflächen der Plattenrohlinge wenigstens zum Teil durch ein zur Herstellung des Schaumstoffblocks verwendendes Formwerkzeug gebildet, so daß diese Randflächen keiner Abdichtung bedürfen und nur die beim Zerschneiden gebildeten Deckflächen der Plattenrohlinge abzudichten wären. Dabei könnten bereits an dem Block Stoßprofile für die Platten vorgeformt werden.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: eine bei der Durchführung des Verfahrens nach der Erfindung verwendbare Schneideinrichtung zur Herstellung von Plattenrohlingen durch Zerschneiden von Schaumstoffblöcken in einer Draufsicht,
- Fig. 2: die Vorrichtung von Fig. 1 in einer Seitenansicht,
- Fig. 3: eine in dem Verfahren nach der Erfindung verwendbare Preßeinrichtung zum allseitigen Pressen eines Plattenrohlings unter Wärmeeinwirkung in einer Draufsicht,
- Fig. 4: die Einrichtung von Fig. 3 in einer Seitenansicht,
- Fig. 5: eine weitere zur Durchführung des Verfahrens nach der Erfindung verwendbare Preßeinrichtung mit Preßwalzen in einer Draufsicht,
- Fig. 6: die Preßeinrichtung von Fig. 5 in einer Seitenansicht,
- Fig. 7: eine dritte bei dem Verfahren nach der Erfindung verwendbare, sowohl Preßstempel als auch Preßwalzen verwendende Preßeinrichtung in einer Draufsicht, und
- Fig. 8: die Preßeinrichtung von Fig. 5 in einer Seitenansicht.

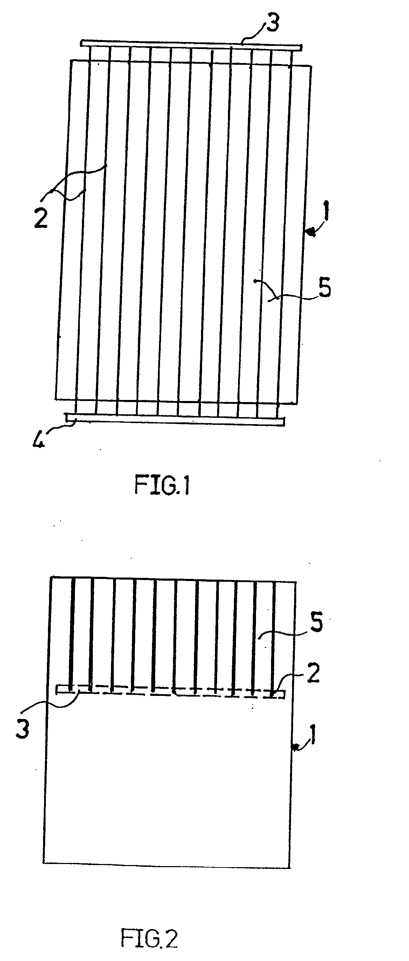

In Fig. 1 ist mit dem Bezugszeichen 1 ein aus Polystyrol bestehender Schaumstoffblock bezeichnet. In den Schaumstoffblock schneiden stromdurchflossene Heizdrähte 2 ein, die sich zwischen Schenkeln 3 und 4 eines Spannrahmens erstrecken, welcher an einer nicht gezeigten Halterung vertikal geführt ist. Die Heizdrähte 2 bringen den Polystyrolschaum des Schaumstoffblocks 1 zum Schmelzen, so daß sich der Spannrahmen entlang der vertikalen Führung bewegen kann und die Heizdrähte 2 in den Schaumstoffblock 1 hinein vordringen können, wobei sie den Schaumstoffblock 1 in Dämmplattenrohlinge 5 zerschneiden.

In dem gezeigten Ausführungsbeispiel sind die Abmessungen des Schaumstoffblocks 1 so bemessen, daß beim Zerteilen des Schaumstoffblocks in die Dämmplattenrohlinge 5 keinerlei Verschnitt entsteht. Zur Herstellung des Schaumstoffblocks 1 wurde ein größerer Schaumstoffblock, der in einem kastenartigen Formwerkzeug unter Aufblähung von ein Treibgas enthaltenden Granulatpartikeln gebildet worden ist, in ähnlicher Weise, wie dies in den Fig. 1 und 2 gezeigt ist, auf die erforderlichen Außenmaße zugeschnitten. Es wäre aber auch denkbar, den Schaumstoffblock 1 von vornherein in den erforderlichen Außenabmessungen mit Hilfe eines Formwerkzeugs herzustellen.

Die gesamte Oberfläche der auf die beschriebene Weise durch Zerschneiden des Schaumstoffblocks 1 hergestellten Dämmplattenrohlinge 5 ist also durch Schnittflächen gebildet, die entsprechend der Struktur des Schaumstoffmaterials keine zur Verwendung als Dämmplatten geeignete Dichtigkeit aufweisen und daher versiegelt werden müssen, um das Eindringen von Feuchtigkeit in die Dämmplatten zu verhindern.

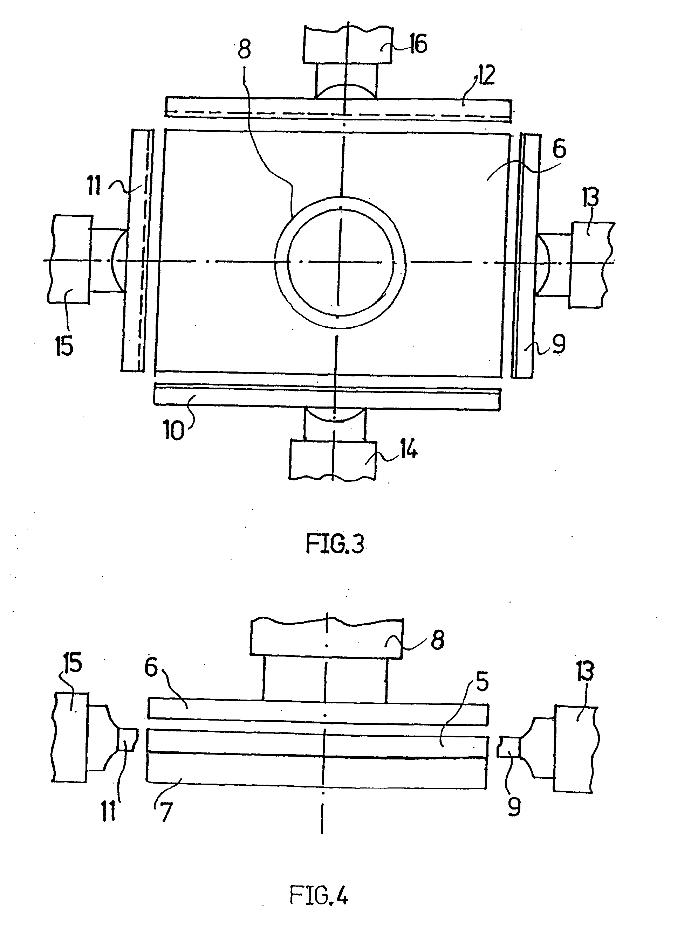

Es wird nun auf Fig. 3 und 4 Bezug genommen, wo eine Einrichtung zur Abdichtung der ausschließlich durch Schnittflächen gebildeten Oberfläche der Dämmplattenrohlinge 5 gezeigt ist.

Ein Dämmplattenrohling wird zwischen beheizten Preßstempeln 6 und 7 angeordnet, wobei der Preßstempel 6 über eine ausschnittsweise dargestellte Zylindereinheit 8 vertikal bewegbar ist. Der Preßstempel 7 bildet eine Auflage für den Dämmplattenrohling 5 und ist an einer nicht gezeigten Trägereinrichtung ortsfest angebracht.

Neben den zum Pressen der Deckflächen des Dämmplattenrohlings 5 in vertikaler Richtung verwendeten Preßstempeln 6 und 7 sind weitere, horizontal bewegbare Preßstempel 9 bis 12 zum Pressen der schmalen Randflächen des Dämmplattenrohlings 5 vorgesehen. Die Preßstempel 9 bis 12 stehen mit Zylindereinheiten 13 bis 16 in Verbindung. Einrichtungen zur Halterung und Führung der Preßstempel 9 bis 12 sind in den Figuren nicht gezeigt.

Die Preßstempel 9 und 11 mit den Zylindereinheiten 13 und 15 sind vertikal bewegbar, um den Zwischenraum zwischen den Preßstempeln 6 und 7 freizugeben, so daß der Dämmplattenrohling 5 dort hinein eingeschoben und auf dem Preßstempel 7 abgelegt werden kann.

Wie insbesondere aus Fig. 4 hervorgeht, sind die Preßstempel 9 bis 12 als Formstempel zum Einpressen eines Stoßprofils in die schmalen Randflächen des Dämmplattenrohlings 5 vorgesehen, wobei einander gegenüberliegende Randflächen jeweils ein komplementäres Stufenprofil aufweisen.

In den Preßstempeln 7 und 8 wie auch in den Preßstempeln 9 bis 12 sind nicht gezeigte Chromheizwendeln verlegt, welche die dem Dämmplattenrohling 5 zugewandten Oberflächen der Preßstempel auf einer Temperatur halten, die dazu ausreicht, bei vorgegebenem Preßvorschub der Stempel und in einer vorgegebenen Preßzeit das Schaumstoffmaterial in einen fließfähigen Zustand zu versetzen. Alternativ zur Strombeheizung wäre eine Dampfbeheizung der Preßstempel denkbar.

Zum Abdichten der Rohlinge werden die Preßstempel 6 sowie 9 bis 12 über die zugeordneten Zylindereinheiten 8 sowie 13 bis 16 an den Dämmplattenrohling 5 angepreßt, wobei in der Vorschubendstellung die Preßstempel 9 bis 12 in den durch die zusammengeführten Stempel 6 und 7 belassenen Zwischenraum derart eingreifen, daß ein den gepreßten Dämmplattenrohling geschlossen umgebender Formraum gebildet ist. Während der Preßzeit erfolgt eine Verdichtung der Oberfläche des Schaumstoffmaterials unter Bildung einer zusammenhängenden oder wenigstens weitgehend zusammenhängenden Haut aus Polystyrol, welche für Feuchtigkeit undurchdringlich ist.

Die Platten können über ihre Stoßprofile aneinandergefügt werden. Die Symmetrie der Platten in bezug auf die Stoßprofile ist derart, daß die Platte in geeigneter Drehposition an jede bereits bestehende Plattenverlegung anschließbar ist.

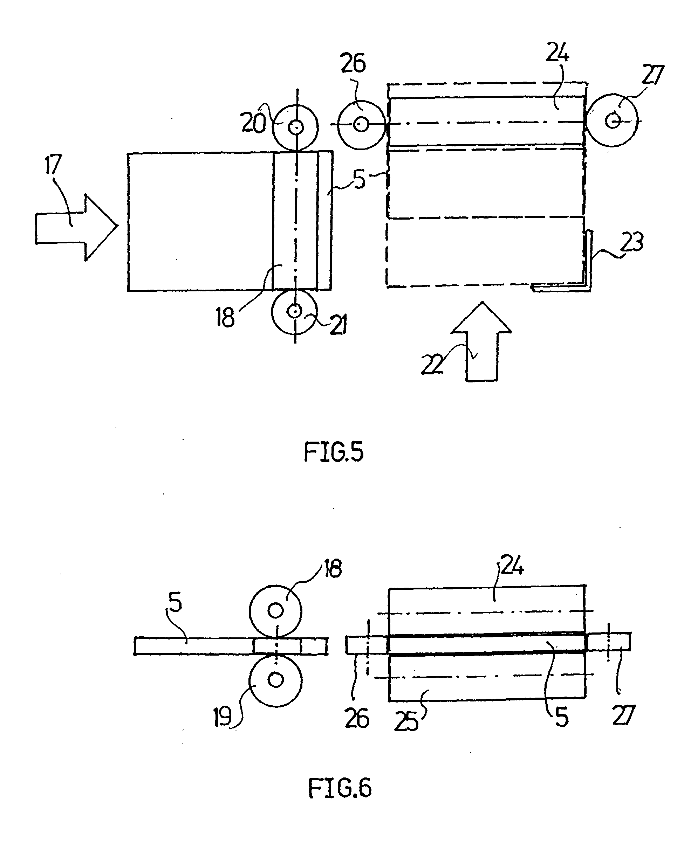

Es wird nun auf Fig. 5 und 6 Bezug genommen, wo eine Einrichtung gezeigt ist, in welcher der Dämmplattenrohling 5 zur Abdichtung seiner Oberflächen ausschließlich durch aufgeheizte Walzen bearbeitet wird.

Der in Richtung eines Pfeils 17 auf einer nicht gezeigten Fördereinrichtung bewegte Dämmplattenrohling 5 tritt in einen Walzenspalt zwischen sich um eine horizontale Achse drehenden Walzen 18 und 19 ein. Ferner sind gegen die schmalen Längsrandflächen des Dämmplattenrohlings anlegbare Vertikalwalzen 20 und 21 vorgesehen.

Hinter der Anordnung aus den Walzen 18 bis 21 erfolgt der Weitertransport des teilbearbeiteten Dämmplattenrohlings senkrecht zur bisherigen Vorschubrichtung entsprechend einem Pfeil 22. Bei 23 ist ein Anschlag gebildet, welcher die Vorschubbewegung in Richtung des Pfeils 17 begrenzt.

Der Dämmplattenrohling 5 gelangt nun in einen Walzenspalt zwischen Horizontalwalzen 24 und 25, welcher seitlich durch weitere Vertikalwalzen 26 und 27 begrenzt ist.

Die Anordnungen aus den Walzen 18 bis 21 sowie 24 bis 27 bilden jeweils einen Walzenspalt, der den Plattenrohling 5 vollständig umschließt, d.h., die Stirnflächen der Vertikal- und Horizontalwalzen berühren sich tangential, wobei die Walzen auf konischen Randabschrägungen an ihren Stirnflächenrändern (nicht gezeigt) aufeinander abrollen. Durch einen solchen geschlossenen Walzenspalt erfolgt eine Rundumbearbeitung des Dämmplattenrohlings, so daß am Dämmplattenrand keine feuchtigkeitsdurchlässigen Stellen verbleiben.

Die Versiegelung der Deckflächen des Dämmplattenrohlings 5 erfolgt durch die Horizontalwalzen 18 und 19 nur teilweise. Die Walzenanordnungen sind so aufeinander abgestimmt sein, daß durch die Horizontalwalzen 24 und 25 die Fertigbearbeitung der Deckflächen des Dämmplattenrohlings 5 vorgenommen wird.

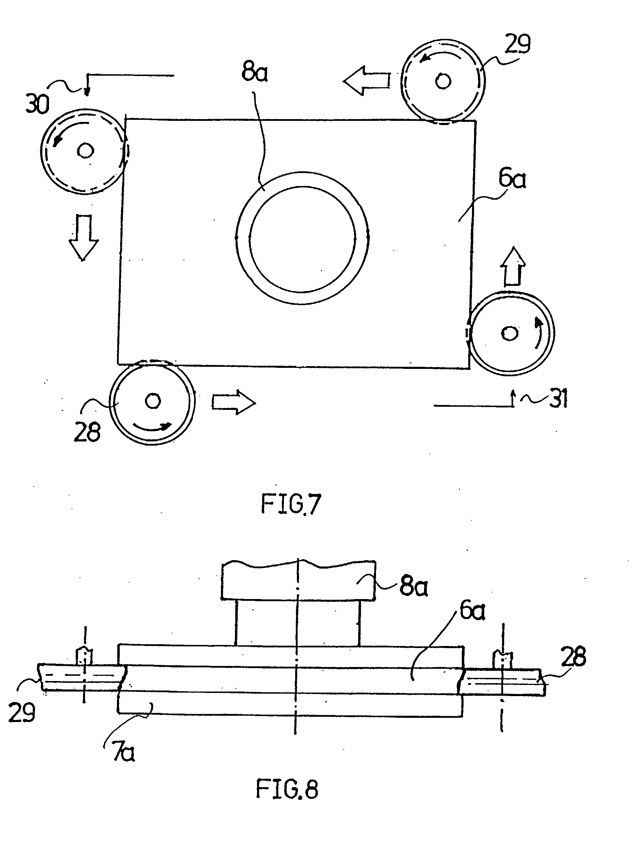

Die Fig. 7 und 8 zeigen eine weitere zur Abdichtung der Dämmplatte 5 geeignete Einrichtung, welche den Preßstempeln 6 und 7 der Einrichtung von Fig. 3 und 4 entsprechende Preßstempel 6a und 7a mit einer den Preßstempel 6a bewegenden Zylindereinheit 8a aufweist.

Neben den geheizten Preßstempeln 6a und 7a sind zur Bearbeitung des Dämmplattenrohlings geheizte Vertikalwalzen 28 und 29 vorgesehen, die entsprechend den gezeigten Pfeilen translatorisch bewegbar und auf den Randseitenflächen des Dämmplattenrohlings 5 abrollen können. Bei 30 und 31 läßt sich die Richtung der Translationsbewegung der Walzen um 90° ändern, so daß jede der Walzen 28 und 29 eine Längsrandfläche und eine Schmalrandfläche des Dämmplattenrohlings 5 bearbeiten kann. Abweichend von dem gezeigten Ausführungsbeispiel könnte auch für jede der Randflächen eine gesonderte Vertikalwalze vorgesehen sein oder für alle Randflächen eine einzige Vertikalwalze verwendet werden.

Einrichtungen zur Halterung und Führung sowie zum Antrieb der Vertikalwalzen sind in den Fig. 7 und 8 nicht gezeigt.

Die Walzenfläche der Vertikalwalzen 28 und 29 weisen ein Profil auf, das dem Profil der Preßflächen der Preßstempel 9 bis 12 der Einrichtung von Fig. 3 und 4 entspricht.

Wie insbesondere Fig. 8 zu entnehmen ist, greifen die Vertikalwalzen 28 und 29 in den zwischen den Preßstempeln 6a und 7a in deren Vorschubendstellung gebildeten Zwischenraum passend derart ein, daß an der Dämmplatte keine unversiegelten Ränder verbleiben.

## Patentansprüche

1. Verfahren zur Herstellung von Dämmplatten aus Schaumstoff, insbesondere für die Außendämmung von Gebäudewänden im Kellerbereich,
**gekennzeichnet durch** Herstellen eines Schaumstoffblocks (1) oder einer Schaumstoffbahn, Zerschneiden des Schaumstoffblocks (1) oder der Schaumstoffbahn in Plattenrohlinge (5) und Abdichten von Schnittflächen der Plattenrohlinge (5), die beim Zerschneiden des Schaumstoffblocks (1) oder der Schaumstoffbahn gebildet werden.

2. Verfahren nach Anspruch 1,
**dadurch gekennzeichnet,**
**daß** zur Abdichtung an den Schnittflächen die Schaumstoffstruktur der Plattenrohlinge in eine geschlossene Materialhaut überführt wird.

3. Verfahren nach Anspruch 2,
**dadurch gekennzeichnet,**
**daß** die geschlossene Materialhaut durch Anschmelzen oder Anlösen der Schnittflächen gebildet wird.

4. Verfahren nach einem der Ansprüche 1 bis 3,
**dadurch gekennzeichnet,**
**daß** zur Abdichtung der Schnittflächen auf die Schnittflächen eine Beschichtung aufgebracht wird.

5. Verfahren nach Anspruch 4,
**dadurch gekennzeichnet,**
**daß** zur Beschichtung auf die Schnittflächen eine Folie oder Auftragsschicht aufgebracht wird.

6. Verfahren nach Anspruch 5,
**dadurch gekennzeichnet,**
**daß** die Folie auf den Plattenrohling aufgeschrumpft oder/und mit dem Plattenrohling verklebt wird.

7. Verfahren nach einem der Ansprüche 1 bis 6,
**dadurch gekennzeichnet,**
**daß** zur Abdichtung der Schnittflächen auf die Schnittflächen, vorzugsweise unter gleichzeitiger Wärmeeinwirkung, eine Preßkraft aufgeübt wird.

8. Verfahren nach einem der Ansprüche 1 bis 7,
**dadurch gekennzeichnet,**
**daß** mit der Abdichtung auch eine Formung von Schnittflächen erfolgt.

9. Verfahren nach Anspruch 8,
**dadurch gekennzeichnet,**
**daß** an den schmalen Randflächen des Plattenrohlings (5) Stoßprofile geformt werden.

10. Verfahren nach Anspruch 8 oder 9,
**dadurch gekennzeichnet,**
**daß** auf sämtliche Schnittflächen des Plattenrohlings gleichzeitig eine Preßkraft ausgeübt wird.

11. Verfahren nach einem der Ansprüche 7 bis 10,
**dadurch gekennzeichnet,**
**daß** die Preßkraft mit Hilfe einer, vorzugsweise geheizten, Walze oder eines, vorzugsweise geheizten, Preßstempels ausgeübt wird.

12. Verfahren nach Anspruch 11,
**dadurch gekennzeichnet,**
**daß** Preßstempel in ihrer Endstellung einen geschlossenen, den bearbeiteten Plattenrohling vollständig einschließenden Formraum bilden.

13. Verfahren nach Anspruche 11,
**dadurch gekennzeichnet,**
**daß** zur Ausübung der Preßkraft Preßstempel (6a) und Walzen (28,29) in Kombination eingesetzt werden.

14. Verfahren nach einem der Ansprüche 1 bis 13,
**dadurch gekennzeichnet,**
**daß** die schmalen Randflächen des Plattenrohlings auf andere Weise als die Deckflächen des Plattenrohlings versiegelt werden.

15. Verfahren nach Anspruch 14,
**dadurch gekennzeichnet,**
**daß** die Deckflächen des Plattenrohlings mittels Preßstempel (6a,7a) gepreßt und die schmalen Randflächen des Plattenrohlings (5) gewalzt (28,29) werden.

16. Verfahren nach einem der Ansprüche 11 bis 14,
**dadurch gekennzeichnet,**
**daß** eine sich translatorisch bewegende Rollenwalze (28,29) verwendet wird.

17. Verfahren nach Anspruch 16,
**dadurch gekennzeichnet,**
**daß** die schmalen Randflächen der Plattenrohlinge durch ein zur Herstellung des Schaumstoffblocks verwendetes Formwerkzeug gebildet werden.

18. Vorrichtung für die Herstellung von Schaumstoffdämmplatten aus Plattenrohlingen (5), die durch Zerschneiden von Schaumstoffblöcken (1) gebildet sind,
**gekennzeichnet durch** eine Preßeinrichtung mit aufheizbaren Preßelementen (6,7;9-12;19-21;24,25;26-29) zur Preßbehandlung der beim Zerschneiden der Schaumstoffblöcke gebildeten Schnittflächen der Plattenrohlinge.

19. Vorrichtung nach Anspruch 18,
**dadurch gekennzeichnet,**
**daß** die Preßelemente Preßstempel (6,7;9-12) oder/und -walzen (18-21:24-29) sind.

20. Vorrichtung nach Anspruch 19,
**dadurch gekennzeichnet,**
**daß** die Preßstempel (6,7;9-12) in ihrer Vorschubendstellung einen geschlossenen Formhohlraum bilden.

21. Vorrichtung nach Anspruch 19,
**dadurch gekennzeichnet,**
**daß** die Preßwalzen (18-21;24-27) einen den Plattenrohling vollkommen umschließenden Walzenspalt bilden.

22. Vorrichtung nach Anspruch 19,
**dadurch gekennzeichnet,**
**daß** Preßstempel (6a,7a) für die Deckflächen der Plattenrohlinge (5) und Preßwalzen (28,29) für die schmalen Randflächen der Plattenrohlinge vorgesehen sind.

23. Vorrichtung nach Anspruch 22,
**dadurch gekennzeichnet,**
**daß** die für die schmalen Randflächen der Plattenrohlinge vorgesehenen Walzen (28,29) translatorisch bewegbare Rollenwalzen sind.

24. Dämmplatte aus Schaumstoff, insbesondere zur Außendämmung von Gebäudewänden im Kellerbereich,
**dadurch gekennzeichnet,**
**daß** die Platte durch Zerschneiden von Schaumstoffblöcken oder -bahnen und in Plattenrohlinge und Abdichten von beim Zerschneiden gebildeten Schnittflächen der Plattenrohlinge gebildet ist.
